# EUROPÄISCHE PATENTANMELDUNG

(11) **EP 1 259 065 A2**
(43) Veröffentlichungstag der Anmeldung: **20.11.2002**
(21) Anmeldenummer: 02100485.8
(22) Anmeldetag: 14.05.2002
(51) Int. Cl.: H04N 5/067, H04J 3/06, H04J 3/08

(54) **Anordnung zum zeitrichtigen Kombinieren zweier Datenströme**

(30) Priorität: 16.05.2001 DE 10123786
(71) Anmelder: Philips Corporate Intellectual Property GmbH, 20099 Hamburg (DE); Koninklijke Philips Electronics N.V., 5621 BA Eindhoven (NL)
(72) Erfinder: Peters, Matthias, Philips Corp. Intell. Prop. GmbH, 52066 Aachen (DE)
(74) Vertreter: Volmer, Georg, Dipl.-Ing.

(57) **Zusammenfassung**

Eine erfindungsgemäße Anordnung zum zeitrichtigen Kombinieren eines ersten, kontinuierlichen, digitalen Datenstromes (V1), der ein Synchronsignal (S) enthält, mit einem zweiten, diskontinuierlichen digitalen Datenstrom (V2), weist die Anordnung zum Ausgleich dieser Diskontinuitäten auf:
- ein erstes Verzögerungsglied (2), das den ersten Datenstrom (V1) um eine erste vorgegebene Zeitspanne verzögert,
- ein zweites Verzögerungsglied (3), das das Synchronsignal (S) des ersten Datenstroms (V1) um eine zweite vorgegebene Zeitspanne verzögert,
- einen Speicher (4), in den der zweite Datenstrom (V2) nach Maßgabe eines Write-Pointers (WP) geschrieben und aus dem er nach Maßgabe eines Read-Pointers (RP) gelesen wird, wobei der Write-Pointer (WP) durch jeden Impuls des unverzögerten Synchronsignals (S; WPR) des ersten Datenstromes (V1) und der Read-Pointer (RP) durch jeden Impuls (RPR) des mittels des zweiten Verzögerungsgliedes (3) verzögerten Synchronsignals des ersten Datenstromes (V1) zurückgesetzt wird, d.h. an den Anfang des Speichers (4) gesetzt wird, und
- Mittel (6) zum Kombinieren oder Verarbeiten der Ausgangsdatenströme des ersten Verzögerungsglieds (2) und des Speichers (4),
wobei die erste Zeitspanne so gewählt ist, dass die Ausgangsdatenströme des ersten Verzögerungsglieds (2) und des Speichers (4) an den Mitteln (6) zum Kombinieren oder Verarbeiten in einer gewünschten zeitlichen Relation zueinander auftreten, und wobei die zweite Zeitspanne so gewählt ist, dass der Read-Pointer (RP) währende des Lesevorgangs aus dem Speicher (4) auch unter Berücksichtigung der in dem zweiten Datenstrom (V2) auftretenden Diskontinuitäten den Write-Pointer (WP) nicht einholt.

## Beschreibung

Die Erfindung betrifft eine Anordnung zum zeitrichtigen Kombinieren eines ersten, kontinuierlichen, digitalen Datenstroms, der ein Synchronsignal enthält, mit einem zweiten, diskontinuierlichen Digital-Datenstrom.

Bei Kombinierung derartiger Datenströme besteht die ggf. der Wunsch, diese zeitrichtig, d.h. in bestimmter, konstanter zeitlicher Relation zueinander miteinander zu kombinieren. Ein Problem tritt hierbei dann auf, wenn einer Datenströme nicht zeitkontinuierlich vorliegt, sondern wenn dessen Bits mit zeitlichen Schwankungen auftreten, also Diskontinuitäten zeitlicher Art in dem Datenstrom auftreten.

Auch wenn hierzu, wie nach dem Stand der Technik bekannt, Zwischenspeicher eingesetzt werden, die in einem bestimmten Rhythmus ausgelesen werden, kann dieses Problem auftreten, da auch das Auslesen eines Speichers bestimmten zeitlichen Schwankungen unterlegen sein kann, beispielsweise dann, wenn gleichzeitig in dem Speicher andere Schreib- oder Lesevorgänge stattfinden.

Es ist Aufgabe der Erfindung, eine Anordnung der eingangs genannten Art anzugeben, bei der die zeitrichtige Kombination beider Datenströme gelingt.

Diese Aufgabe ist erfindungsgemäß durch die folgenden Merkmale des Patentanspruches 1 gelöst.

Anordnung zum zeitrichtigen Kombinieren eines ersten, kontinuierlichen, digitalen Datenstromes, der ein Synchronsignal enthält, mit einem zweiten, diskontinuierlichen digitalen Datenstrom, wobei die Anordnung aufweist:
- ein erstes Verzögerungsglied, das den ersten Datenstrom um eine erste vorgegebene Zeitspanne verzögert,
- ein zweites Verzögerungsglied, das das Synchronsignal des ersten Datenstroms um eine zweite vorgegebene Zeitspanne verzögert,
- einen Speicher, in den der zweite Datenstrom nach Maßgabe eines Write-Pointers geschrieben und aus dem er nach Maßgabe eines Read-Pointers gelesen wird, wobei der Write-Pointer durchjeden Impuls des unverzögerten Synchronsignals des ersten Datenstromes und der Read-Pointer durchjeden Impuls des mittels des zweiten Verzögerungsgliedes verzögerten Synchronsignals des ersten Datenstromes zurückgesetzt wird, d.h. an den Anfang des Speichers gesetzt wird, und
- Mittel zum Kombinieren oder Verarbeiten der Ausgangsdatenströme des ersten Verzögerungsglieds und des Speichers,
wobei die erste Zeitspanne so gewählt ist, dass die Ausgangsdatenströme des ersten Verzögerungsglieds und des Speichers an den Mitteln zum Kombinieren oder Verarbeiten in einer gewünschten zeitlichen Relation zueinander auftreten, und wobei die zweite Zeitspanne so gewählt ist, dass der Read-Pointer währende des Lesevorgangs aus dem Speicher auch unter Berücksichtigung der in dem zweiten Datenstrom auftretenden Diskontinuitäten den Write-Pointer nicht einholt.

Der erste Datenstrom ist kontinuierlich, d.h. die Zeitbasis, mit der er übertragen wird, unterliegt keinen wesentlichen Schwankungen. Dieser erste Datenstrom enthält ein Synchronsignal, das in der erfindungsgemäßen Anordnung zum Synchronisieren des zweiten Datenstrom verwendet wird.

Der zweite Datenstrom liegt im Gegensatz zu dem ersten Datenstrom diskontinuierlich vor, d.h., dass die in ihm übertragenen Daten nicht in einem konstanten Zeitraster übertragen werden, sondern dass dieses Zeitraster Schwankungen unterliegt.

Werden diese beiden Datenströme ohne weitere Maßnahme miteinander kombiniert, so werden Bits verschiedener Positionen in den beiden Datenströmen miteinander kombiniert, je nachdem wie groß die Zeitbasis-Schwankungen in dem zweiten Datenstrom sind.

Dies wird erfindungsgemäß durch einen speziellen Speicher vermieden, der mit einem sog. Write-Pointer und einem Read-Pointer arbeitet sowie durch eine spezielle Ansteuerung der Pointer.

Der Write-Pointer gibt die Position des Speichers an, in die aktuell die nächsten Daten geschrieben werden. Die Position des Read-Pointers gibt diejenige Position an, ab der die nächsten Daten aus dem Speicher gelesen werden. Der Speicher wird dazu verwendet, den zweiten Datenstrom zwischenzuspeichern und nach Maßgabe dieser beiden Pointer in dem Speicher abzuspeichern und aus diesem wieder auszulesen.

Der Write-Pointer wird durchjeden Impuls des unverzögerten Synchronsignals des ersten Datenstromes zurückgesetzt, d.h. an den Anfang des Speichers gesetzt. Nach dem Auftreten eines solchen Impulses werden die Daten des zweiten Datenstromes, also ab diesem Punkt in den Speicher geschrieben.

Der Read-Pointer wird immer dann zurückgesetzt, wenn in dem mittels eines zweiten Verzögerungsgliedes verzögerten Synchronsignal des ersten Datenstromes ein Impuls auftritt. Da dieses Signal, das zum Rücksetzen des Read-Pointers eingesetzt wird, gegenüber dem Signal zum Rücksetzen des Write-Pointers zeitversetzt auftritt, nämlich um den Zeitversatz, den das zweite Verzögerungsglied dem Synchronsignal zuführt, wird der Rücksetzgang des Read-Pointers entsprechend später stattfinden. Dies bedeutet, dass der Auslesevorgang aus dem Speicher zeitlich verzögert gegenüber dem Schreibvorgang beginnt.

Dadurch können Schwankungen in der Zeitbasis des zweiten Datenstromes ausgeglichen werden, da durch den Vorlauf, den der Write-Pointe gegenüber dem Read-Pointer hat, ggf. auftretende Diskontinuitäten beim Schreibvorgang sich nicht unmittelbar auf den Lesevorgang auswirken, der zeitlich verzögert stattfindet. Dabei ist die Verzögerungszeit des Synchronsignals, also die Zeitspanne, mit der das zweite Verzögerungsglied das Synchronsignal verzögert, so zu wählen, dass der Read-Pointer während eines Lesevorgangs aus dem Speicher den Write-Pointer nicht einholt. Es kann ggf. vorkommen, dass der Write-Pointer aufgrund von Diskontinuitäten während einer begrenzten Zeit langsamer geschaltet wird, d.h. auf neue Positionen geschaltet wird, als der Read-Pointer. In dieser Situation holt der Read-Pointer den Write-Pointer tendenziell ein. Die zweite Zeitspanne ist so zu wählen, dass während eines Schreib- und Lesevorgangs aus dem Speicher auch unter Berücksichtigung derartiger Diskontinuitäten immer zuerst der Schreibvorgang und später der Lesevorgang stattfindet.

Da die aus dem Speicher ausgelesenen Signale aufgrund dieser Konzeption relativ zeitlich verzögert werden, ist ein erstes Verzögerungsglied vorgesehen, welches den ersten Datenstrom um eine solche Zeitspanne verzögert, dass die aus dem Speicher ausgelesenen Daten und die aus dem ersten Verzögerungsglied kommenden Daten an Mitteln zum Kombinieren oder Verarbeiten diese Daten in einer gewünschten zeitlichen Relation zueinander auftreten. Mit anderen Worten: Die Verzögerung, die durch den Schreib- und Lesevorgang und den Versatz des Read-Pointers gegenüber dem Write-Pointer in dem Speicher auftritt, wird durch das erste Verzögerungsglied ausgeglichen.

Durch die erfindungsgemäße Anordnungen können Zeitbasis-Schwankungen in dem zweiten Datenstrom vollständig ausgeglichen werden, und die beiden Datenströme können in gewünschter Weise Bit-genau miteinander kombiniert werden.

Dies ist insbesondere dann von Bedeutung, wenn es sich bei den Datenströmen um Video-Datenströme handelt, wie gemäß einer Ausgestaltung der Erfindung nach Anspruch 2 vorgesehen ist. In diesem Fall handelt es sich bei dem Synchronsignal des ersten Video-Datenstromes um ein horizontales Synchronsignal. Die erfindungsgemäße Anordnung kann in diesem Fall vorteilhaft dazu eingesetzt werden, die beiden Video-Datenströme bildpunktgenau miteinander zu kombinieren, obwohl in dem zweiten Video-Datenstrom Zeitbasisfehler, d.h. Diskontinuitäten, auftreten.

Für den Einsatz der erfindungsgemäßen Anordnung für derartige Video-Datenströme ist es vorteilhaft, wie gemäß einer weiteren Ausgestaltung der Erfindung nach Anspruch 3 vorgesehen ist, den Speicher als Zeilenspeicher auszubilden, der die Daten einer Bildzeile des zweiten Video-Datenstromes aufzunehmen in der Lage ist. Es werden dann mitjedem Impuls des horizontalen Synchronsignals des ersten Video-Datenstromes der Write-Pointer dieses Zeilenspeichers und; verzögert um die vorgegebene zweite Zeitspanne, der Read-Pointer dieses Speichers zurückgesetzt. Dies geschiehtjeweils am Ende einer Bildzeile, so dass die nächste Bildzeile wieder beginnend an den Anfang des Zeilenspeichers geschrieben werden kann und zeitverzögert gemäß Position des Read-Pointers wieder ausgelesen wird.

Die Diskontinuitäten des zweiten Datenstromes bzw. Video-Datenstromes können verschiedene Ursachen haben. Beispielsweise kann es so sein, wie gemäß einer weiteren Ausgestaltung der Erfindung nach Anspruch 4 vorgesehen, dass der zweite Video-Datenstrom aus einem externen SDRAM stammt und die Diskontinuitäten durch den Auslesevorgang aus diesem SDRAM entstehen. Diese Situation ist bei der Verarbeitung von Video-Signalen relativ häufig. Diese Diskontinuitäten können beispielsweise auch dadurch entstehen, dass das SDRAM auch andere Daten aufnimmt, die in das SDRAM geschrieben bzw. aus diesem gelesenen werden müssen. Dadurch können beim Auslese-Vorgang der Video-Daten aus dem SDRAM Zeitverzögerungen auftreten, da ggf zuerst die anderen Daten geschrieben bzw. gelesen werden.

Wird die erfindungsgemäße Anordnung für Video-Datenströme eingesetzt, so kann sie vorteilhaft dazu vorgesehen sein, wie dies gemäß einer weiteren Ausgestaltung der Erfindung nach Anspruch 5 vorgesehen ist, dass die Datenströme für Zwecke einer Rauschreduktion des ersten oder zweiten Video-Datenstromes miteinander kombiniert werden.

Eine andere vorteilhafte Anwendung der erfindungsgemäßen Anordnung besteht für Video-Datenströme gemäß Anspruch 6 darin, die Kombination der Datenströme zur Erzeugung einer Bild-im-Bild-Funktion einzusetzen.

Die erfindungsgemäße Anordnung eignet sich deshalb besonders für die Verarbeitung von Video-Datenströmen, weil es bei deren Kombination tatsächlich darauf ankommt, dass in beiden Datenströme keine Zeitbasis-Schwankungen vorhanden sind und die Datenströme bildpunktgenau miteinander kombiniert werden. Ist dies nicht der Fall, treten Bildstörungen in dem kombinierten Signal auf. Diese können durch die erfindungsgemäße Anordnung verhindert werden.

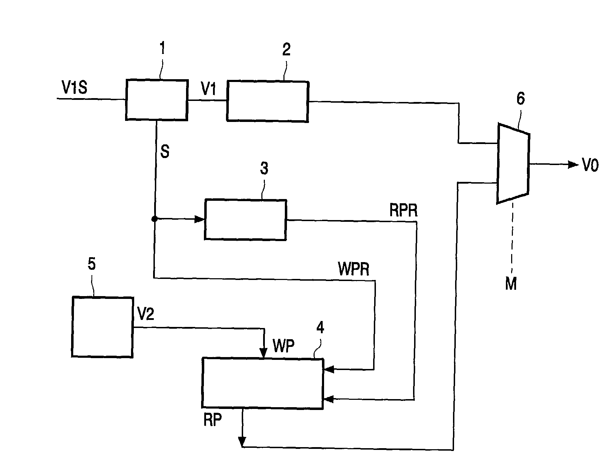

Nachfolgend wird ein Ausführungsbeispiel der erfindungsgemäßen Anordnung anhand der einzigen Figur der Zeichnung näher erläutert.

Die einzige Figur zeigt in Form eines Blockschaltbildes eine erfindungsgemäße Anordnung zum Kombinieren eines ersten Video-Datenstromes V1S und eines zweiten Video-Datenstromes V2.

Der erste Video-Datenstrom V1S enthält ein Synchronsignal S. Es wird davon ausgegangen, dass der erste Video-Datenstrom V1 bzw. V1S keine störende Zeitbasis-Schwankungen aufweist, d.h. kontinuierlich vorliegt.

Der zweite Video-Datenstrom V2 weistjedoch Zeitbasis-Schwankungen auf, d.h. die einzelnen Bits oder Bites dieses Signals treten nicht in konstantem zeitlichen Abstand zueinander auf bzw. treten nicht in einem festen Zeitraster auf. Diese Diskontinuitäten des zweiten Video-Datenstroms werden mittels der erfindungsgemäßen Anordnung beseitigt, so dass die beiden Video-Datenströme miteinander kombiniert werden können.

Das Blockschaltbild gemäß der Figur zeigt zunächst eine Trennstufe 1, in der der erste Video-Datenstrom V1S von seinem Synchronsignal S abgetrennt wird. Der erste Video-Datenstrom V1 wird nachfolgend einem ersten Verzögerungsglied 2 zugeführt, in welchem er um eine erste vorgegebene Zeitspanne verzögert wird, auf deren Dauer weiter unten noch einzugehen sein wird.

Das aus dem ersten Video-Datenstrom V1S abgetrennte Synchronsignal, bei dem es sich um ein Horizontal-Synchronsignal handelt, wird einerseits einem zweiten Verzögerungsglied 3 zugeführt, das dieses Signal um eine zweite vorgegebene Zeitspanne verzögert. Das entsprechend verzögerte Signal, das das zweite Verzögerungsglied 3 liefert, dient als Rücksetzsignal für ein Read-Pointer eines Zeilenspeichers 4 und ist in der Figur mit RPR gekennzeichnet.

Das unverzögerte Horizontal-Synchronsignal S des ersten Video-Datenstromes gelangt außerdem in unverzögerte Weise als Signal WPR ebenfalls an den Zeilenspeicher 4 und dient als Rücksetzsignal für einen Write-Pointer dieses Zeilenspeichers 4.

In dem Ausführungsbeispiel gemäß der Figur wird davon ausgegangen, dass der zweite Video-Datenstrom V2 aus einem externen Speicher, insbesondere einem SDRAM 5 kommt. Der Auslesevorgang der Daten aus dem SDRAM 5 kann ggf. diskontinuierlich erfolgen, beispielsweise, weil das SDRAM 5 auch zum Speichern anderer Daten eingesetzt wird. Der Video-Datenstrom V2 liegt also wie oben bereits erläutert, diskontinuierlich vor und gelangt entsprechend in den Zeilenspeicher 4, bei dem es sich um einen Zeilenspeicher handelt, der eine Zeile eines Video-Datenstromes aufnehmen kann.

Die Stelle des Speichers, in die die aktuellen Video-Daten des zweiten Video-Datenstromes V2 in den Zeilenspeicher 4 geschrieben werden, wird durch einen sog. Write-Pointer bestimmt, der in der Figur mit WP gekennzeichnet ist. Die Position des Write-Pointers wird laufend verändert, d.h., ist eine bestimmte Position des Zeilenspeichers 4 mit neuen Daten beschrieben worden, so rückt der Write-Pointer an die nächste freie Position.

Der Write-Pointer wird durch das Signal WPR zurückgesetzt. Dies bedeutete also, dass mit jedem Auftreten eines Impulses in dem Horizontal-Synchronsignal des ersten Video-Datenstromes V1S der Write-Pointer WP des Zeilenspeichers 4 an dessen Anfang zurückgesetzt wird. Nachfolgend werden Daten des zweiten Video-Datenstromes V2 nach Maßgabe der sich ständig weiterschiebenden Position des Write-Pointers in den Zeilenspeicher 4 geschrieben.

Es findet gleichzeitig ein Auslesevorgang aus dem Zeilenspeicher 4 statt, welcher nach Maßgabe eines Read-Pointers, der in der Figur mit RP gekennzeichnet ist, vorgenommen wird. Der Rücksetzvorgang wird durch das mittels des zweiten Verzögerungsgliedes 3 verzögerten Horizontal-Synchronsignal des ersten Video-Datenstromes vorgenommen. Durch diese Verzögerung wird erreicht, dass der Read-Pointer später zurückgesetzt wird und somit auch der Auslesevorgang zeitlich verzögert stattfindet. Mit anderen Worten läuft der Read-Pointer beim Auslesevorgang dem Write-Pointer hinterher.

Treten nun in der Zeitbasis des zweiten Video-Datenstromes V2 Diskontinuitäten auf, so kann es vorkommen, dass der Write-Pointer während einer begrenzten Zeit langsamer fortbewegt wird als der Read-Pointer, da während dieser Zeit weniger Daten des zweiten Video-Datenstromes auftreten als dies im Mittel der Fall ist. Es kann natürlich auch der umgekehrte Fall eintreten, dass mehr Daten auftreten als im Mittel vorgesehen, so dass sich die Position des Write-Pointers von der des Read-Pointers wieder weiter entfernt.

Die mittels des zweiten Verzögerungsgliedes 3 erzeugte Verzögerung des Horizontal-Synchronsignals des ersten Video-Datenstromes V1S ist dabei so zu wählen, dass auch bei Auftreten derartiger Diskontinuitäten bei einem Auslesevorgang der Daten aus dem Zeilenspeicher 4 der Read-Pointer RP den Write-Pointer WP niemals einholt, also nicht dessen Position erreicht.

Die Größe der zweiten Verzögerungsspanne ist also gemäß der Größe der Diskontinuitäten in dem zweiten Video-Datenstrom einzustellen.

Entsprechend dem Write-Pointer WP wird der Auslesevorgang aus dem Zeilenspeicher 4 mittels des Read-Pointers RP so vorgenommen, dass nach einem Rücksetzvorgang die Position des Read-Pointers in dem Zeilenspeicher 4 laufend verändert wird, d.h. nach Auslesen von Daten einer bestimmten Position in dem Zeilenspeicher 4 rückt der Read-Pointer an die nächste Position vor, so dass als nächstes die Daten aus dieser Position ausgelesen werden.

Durch die oben erläuterte Arbeitsweise des zweiten Zeilenspeichers 4 tritt der nach Maßgabe des Read-Pointers aus dem Zeilenspeicher 4 ausgelesene Datenstrom zeitlich verzögert auf. Er liegtjedoch nunmehr als kontinuierlicher Datenstrom vor, da die Position des Read-Pointers zeitkontinuierlich in gewünschter Weise verändert wird und somit die ausgelesenen Video-Daten kontinuierlich vorliegen.

Es trittjedoch insgesamt eine Zeitverzögerung durch das Schreiben und Lesen in bzw. aus dem Zeilenspeicher 4 auf, die mittels der ersten vorgegeben Zeitspanne des ersten Verzögerungsgliedes 2 so ausgeglichen wird, dass der erste Video-Datenstrom 1 um eine solche Zeitspanne verzögert wird, dass eine gewünschte zeitliche Relation der Ausgangssignale des ersten Verzögerungsgliedes 2 und der Ausgangssignale des Zeilenspeichers 4 zueinander auftritt.

Diese beiden Signale werden nämlich Mitteln 6 zum Verarbeiten oder Kombinieren dieser beiden Signale zugeführt und sollen an den Eingängen dieser Mittel 6 in gewünschter zeitlicher Relation zueinander auftreten.

In dem Ausführungsbeispiel gemäß der Figur handelt es sich bei den Mitteln 6 um einen Multiplexer, der mittels eines Steuersignals M angesteuert wird, und der ausgangsseitig ein Video-Signal VO liefert. In dem Beispiel gemäß der Figur kann auf diese Weise eine Bild-im-Bild-Funktion erzeugt werden. Für eine solche Funktion müssen die beiden miteinander kombinierten Video-Signale exakt in einer gewünschten bzw. erforderlichen zeitlichen Relation zueinander vorliegen, was mittels der erfindungsgemäßen Anordnung gelingt, obwohl der zweite Video-Datenstrom V2 aus dem externen SD-Raum 5 diskontinuierlich ausgelesen wird und somit diskontinuierlich vorliegt.

Je nach Anwendung kann in der erfindungsgemäßen Anordnung statt des Zeilenspeichers 4 auch ein anderer Speicher vorgesehen sein. Auch ist die erfindungsgemäße Anordnung nicht nur für Video-Datenströme, sondern grundsätzlich für beliebige Datenströme einsetzbar.

Durch den Zeilenspeicher 4 der erfindungsgemäßen Anordnung und die spezielle Art des Rücksetzens von Write-Pointer und Read-Pointer gelingt es, Diskontinuitäten in einem der Datenströme vollständig auszugleichen. Die dabei auftretenden Verzögerungszeiten werden durch das erste Verzögerungsglied 2 ausgeglichen.

Als Ergebnis liefert die erfindungsgemäße Anordnung die beiden Datenströme in gewünschter zeitlicher Relation zueinander und ohne Diskontinuitäten.

## Patentansprüche

1. Anordnung zum zeitrichtigen Kombinieren eines ersten, kontinuierlichen, digitalen Datenstromes (V1), der ein Synchronsignal (S) enthält, mit einem zweiten, diskontinuierlichen digitalen Datenstrom (V2), wobei die Anordnung aufweist:
- ein erstes Verzögerungsglied (2), das den ersten Datenstrom (V1) um eine erste vorgegebene Zeitspanne verzögert,
- ein zweites Verzögerungsglied (3), das das Synchronsignal (S) des ersten Datenstroms (V1) um eine zweite vorgegebene Zeitspanne verzögert,
- einen Speicher (4), in den der zweite Datenstrom (V2) nach Maßgabe eines Write-Pointers (WP) geschrieben und aus dem er nach Maßgabe eines Read-Pointers (RP) gelesen wird, wobei der Write-Pointer (WP) durchjeden Impuls des unverzögerten Synchronsignals (S; WPR) des ersten Datenstromes (V1) und der Read-Pointer (RP) durchjeden Impuls (RPR) des mittels des zweiten Verzögerungsgliedes (3) verzögerten Synchronsignals des ersten Datenstromes (V1) zurückgesetzt wird, d.h. an den Anfang des Speichers (4) gesetzt wird, und
- Mittel (6) zum Kombinieren oder Verarbeiten der Ausgangsdatenströme des ersten Verzögerungsglieds (2) und des Speichers (4),
wobei die erste Zeitspanne so gewählt ist, dass die Ausgangsdatenströme des ersten Verzögerungsglieds (2) und des Speichers (4) an den Mitteln (6) zum Kombinieren oder Verarbeiten in einer gewünschten zeitlichen Relation zueinander auftreten, und wobei die zweite Zeitspanne so gewählt ist, dass der Read-Pointer (RP) währende des Lesevorgangs aus dem Speicher (4) auch unter Berücksichtigung der in dem zweiten Datenstrom (V2) auftretenden Diskontinuitäten den Write-Pointer (WP) nicht einholt.

2. Anordnung nach Anspruch 1,
**dadurch gekennzeichnet,**
**dass** es sich bei den Datenströmen (V1, V2) um Video-Datenströme handelt, von denen der erste als Synchronisationssignal (S) ein Horizontal-Synchronsignal enthält.

3. Anordnung nach den Ansprüchen 1 und 2,
**dadurch gekennzeichnet,**
**dass** als Speicher (4) ein Zeilenspeicher vorgesehen ist, der die Daten einer Bildzeile des zweiten Video-Datenstromes (V2) aufzunehmen in der Lage ist.

4. Anordnung nach Anspruch 1,
**dadurch gekennzeichnet,**
**dass** der zweite Video-Datenstrom (V2) aus einem externen SDRAM (5) kommt und dass die Diskontinuitäten dieses Datenstromes durch den Auslesevorgang aus diesem SDRAM (5) entstehen.

5. Anordnung nach den Ansprüchen 1 und 2,
**dadurch gekennzeichnet,**
**dass** die Mittel (6) zum Kombinieren oder Verarbeiten der Ausgangsdatenströme des ersten Verzögerungsglieds (2) und des Speichers (4) einer Rauschreduktion des ersten oder zweiten Video-Datentstromes (V1; V2) dienen.

6. Anordnung nach den Ansprüchen 1 und 2,
**dadurch gekennzeichnet,**
**dass** die Mittel (6) zum Kombinieren oder Verarbeiten der Ausgangsdatenströme des ersten Verzögerungsglieds (2) und des Speichers (4) dazu dienen, einen der Video-Datenströme (V1;V2) mit dem anderen Video-Datenstrom (V1;V2) so zu kombinieren, dass eine Bild-im-Bild-Funktion realisiert wird.
